(19) **Europäisches Patentamt / European Patent Office / Office européen des brevets**

(11) **EP 4 350 918 B1**

(12) **EUROPEAN PATENT SPECIFICATION**

(45) Date of publication and mention of the grant of the patent:
**05.11.2025 Bulletin 2025/45**

(21) Application number: **22939913.4**

(22) Date of filing: **06.12.2022**

(51) International Patent Classification (IPC):
*G06Q 10/0635* (2023.01)      *G06Q 50/06* (2024.01)
*H02H 3/20* (2006.01)      *H02J 3/00* (2006.01)

(52) Cooperative Patent Classification (CPC):
**H02J 3/0012; G06Q 10/0635; G06Q 50/06;
H02H 3/20; H02J 3/00125**

(86) International application number:
**PCT/CN2022/136790**

(87) International publication number:
**WO 2023/207099 (02.11.2023 Gazette 2023/44)**

(54) **METHOD AND SYSTEM FOR IDENTIFYING DOMINANT OVERVOLTAGE OF A HIGH-PROPORTION NEW ENERGY POWER SYSTEM, ELECTRONIC DEVICE, STORAGE MEDIUM, AND COMPUTER PROGRAM PRODUCT**

VERFAHREN UND SYSTEM ZUR IDENTIFIZIERUNG DOMINANTER ÜBERSPANNUNG EINES HOCHPROPORTIONELLEN NEW-ENERGY-STROMSYSTEMS, ELEKTRONISCHE VORRICHTUNG, SPEICHERMEDIUM UND COMPUTERPROGRAMMPRODUKT

PROCÉDÉ ET SYSTÈME D'IDENTIFICATION DE SURTENSION DOMINANTE D'UN SYSTÈME D'ALIMENTATION EN NOUVELLES ÉNERGIES À PROPORTION ÉLEVÉE, DISPOSITIF ÉLECTRONIQUE, SUPPORT DE STOCKAGE ET PRODUIT-PROGRAMME D'ORDINATEUR

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **29.04.2022   CN 202210475787**

(43) Date of publication of application:
**10.04.2024 Bulletin 2024/15**

(73) Proprietor: **China Electric Power Research Institute**
**Beijing 100192 (CN)**

(72) Inventors:
• **XU, Shiyun**
  **Beijing 100192 (CN)**
• **SUN, Huadong**
  **Beijing 100192 (CN)**
• **WANG, Yiming**
  **Beijing 100192 (CN)**
• **ZHAO, Bing**
  **Beijing 100192 (CN)**

• **BI, Jingtian**
  **Beijing 100192 (CN)**
• **WANG, Shuyan**
  **Beijing 100192 (CN)**

(74) Representative: **White, Andrew John et al**
**Mathys & Squire**
**The Shard**
**32 London Bridge Street**
**London SE1 9SG (GB)**

(56) References cited:
**CN-A- 112 560 222      CN-A- 113 705 138
CN-A- 113 783 232      CN-A- 113 783 232
CN-A- 113 890 083      CN-A- 114 118 546
US-A1- 2020 266 722**

EP 4 350 918 B1

- **NDREKO MARIO ET AL: "Optimal fault ride through compliance of offshore wind power plants with VSC-HVDC connection by meta-heuristic based tuning", ELECTRIC POWER SYSTEMS RESEARCH, ELSEVIER, AMSTERDAM, NL, vol. 145, 6 January 2017 (2017-01-06), pages 99 - 111, XP029916793, ISSN: 0378-7796, DOI: 10.1016/J.EPSR.2016.12.024**

**Description**

CROSS-REFERENCE TO RELATED APPLICATIONS

This application is filed based on and claims priority to Chinese Patent application No. 202210475787.1 filed on April 29, 2022 and entitled "METHOD AND SYSTEM FOR IDENTIFYING DOMINANT OVERVOLTAGE OF HIGH-PROPORTION NEW ENERGY POWER SYSTEM".

TECHNICAL FIELD

The disclosure relates to, but is not limited to, the technical field of safety and stability analysis for a high-proportion new energy power system, and in particular to a method and system for identifying a dominant overvoltage of a high-proportion new energy power system, an electronic device, a storage medium, and a computer program product.

BACKGROUND

With the increasing proportion of power electronic devices such as new energy power generation devices or the like in installed capacity of a power system, safety and stability characteristics of the power system are undergoing significant changes. Safety issues of new power systems, represented by overvoltage, have become increasingly prominent, which greatly restricts access scales of the new energy power generation devices in the power system.
In a high-proportion new energy power system, there are numerous causation and rich function mechanisms to induce overvoltage, and there are obvious differences in possibility of overvoltage occurred to different devices and buses in a power grid and risks caused by the overvoltage. Therefore, it is of great practical significance to analyze risks and their correlation relationships of overvoltage of different devices and buses, locate a dominant overvoltage constraint and further take corresponding suppression and protection measures, to guide design of controllers in the new energy power generation devices and safety and guide stability analysis and control of the high-proportion new energy power system.
However, existing researches mainly focus on calculation and evaluation of degree of overvoltage of the power system, with little focus on analysis and research of correlation relationships of overvoltage among different devices and buses in the power grid, and especially, research on a method for identifying a dominant overvoltage by considering an overvoltage limit has not been reported yet. In a word, a method for identifying a dominant overvoltage of a high-proportion new energy power system by considering dynamics of a phase locked loop (PLL), is still absent at present.
Related background may be found in CN 113 783 232 A (CHINA ELECTRIC POWER RES INST CO LTD) 10 December 2021.

SUMMARY

The present invention is defined in the appended independent claims. Advantageous features are set out in the appended dependent claims.
Embodiments of the disclosure provide a method and system for identifying a dominant overvoltage of a high-proportion new energy power system, an electronic device, a storage medium, and a computer program product.
According to an aspect of the embodiments of the disclosure, there is provided a method for identifying a dominant overvoltage of a high-proportion new energy power system, according to claim 1.
According to another aspect of the embodiments of the disclosure, there is provided a system for identifying a dominant overvoltage of a high-proportion new energy power system, according to claim 4.
According to another aspect of the embodiments of the disclosure, an embodiment of the disclosure provides a computer-readable storage medium, having stored thereon a computer program, the program implements operations of the method for identifying a dominant overvoltage of a high-proportion new energy power system when the program is executed by a processor.
According to another aspect of the embodiments of the disclosure, an embodiment of the disclosure provides an electronic device, the electronic device includes the above computer-readable storage medium and one or more processors configured to execute the program in the computer-readable storage medium.
According to another aspect of the embodiments of the disclosure, an embodiment of the disclosure provides a computer program product, the computer program product includes a computer instruction, the computer instruction enables a computer device to perform operations of the above method for identifying a dominant overvoltage of a high-proportion new energy power system when the computer instruction is executed on the computer device.
The embodiments of the disclosure provide a method and system for identifying a dominant overvoltage of a high-proportion new energy power system, including the following operations. A voltage amplitude of a new energy terminal and a voltage amplitude of an AC bus at any moment after faults of the new energy terminal and the AC bus are cleared, are determined respectively. An overvoltage limit ratio is determined according to a ratio of the voltage amplitude of the new energy terminal to the voltage amplitude of the AC bus. A critical overvoltage limit ratio is determined. A maximum new energy terminal voltage value and a maximum AC bus voltage value bearable for the new energy terminal and the AC bus are determined respectively. Identification of a dominant voltage safety constraint is performed according to the overvoltage limit ratio, the critical overvoltage limit ratio, the maximum new energy terminal voltage value and the maximum AC bus voltage value, and an identification result is determined. The embodiments of the disclosure take a voltage source converter (VSC) grid-connected system as a research object, establish a voltage analytical calculation model which considers dynamic characteristics of a PLL, and reveal a correlation relationship between voltage dynamics of the VSC grid-connected system and dynamics of the PLL; and take an overvoltage limit ratio as an index, and implement identification of a dominant voltage constraint by considering an overvoltage limit. The embodiments of the disclosure may provide strong support for safety and stability analysis and control of the high-proportion new energy power system.

BRIEF DESCRIPTION OF THE DRAWINGS

Exemplary embodiments of the disclosure may be understood more completely with reference to the following drawings.

FIG. 1 is a flowchart of a method 100 for identifying a dominant overvoltage of a high-proportion new energy power system according to an embodiment of the invention.

FIG. 2 is a schematic diagram of a model of a VSC grid-connected system which considers dynamics of a PLL according to an embodiment of the invention.

FIG. 3 is a topology diagram of a control link of a PLL according to an embodiment of the invention.

FIG. 4 is a schematic diagram of a voltage variation of a VSC grid-connected system in a large disturbance transient process according to an embodiment of the invention.

FIG. 5 is a schematic diagram of an electrical vector relationship according to an embodiment of the invention.

FIG. 6 is a schematic structural diagram of a system 600 for identifying a dominant overvoltage of a high-proportion new energy power system according to an embodiment of the invention.

DETAILED DESCRIPTION

Exemplary embodiments and examples of the disclosure are described now with reference to the drawings. However, the disclosure may be implemented in many different forms and is not limited to the embodiments and examples described here. These embodiments and examples are provided to disclose the disclosure thoroughly and completely, and to fully convey the scope of the disclosure to those skilled in the art. Terms of the exemplary embodiments and examples represented in the drawings are not intended to limit the disclosure. In the drawings, the same unit/component is marked with the same reference symbol.

Unless otherwise specified, terms used here (including technological terms) have commonly understood meanings to those skilled in the art. Furthermore, it may be understood that terms defined in commonly used dictionaries should be understood to have meanings consistent with the context of their relevant field, and should not be understood as idealistic or too formal meanings.

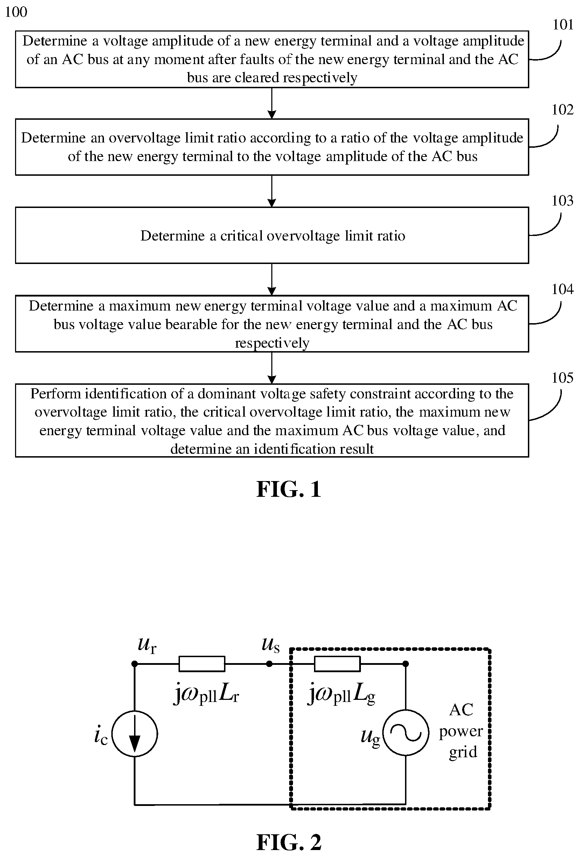

FIG. 1 is a flowchart of a method 100 for identifying a dominant overvoltage of a high-proportion new energy power system according to an embodiment of the disclosure. As shown in FIG. 1, the method for identifying a dominant overvoltage of a high-proportion new energy power system provided by the embodiment of the disclosure takes a voltage source converter (VSC) grid-connected system as a research object, establishes a voltage analytical calculation model which considers dynamic characteristics of a phase locked loop (PLL), and reveals a correlation relationship between voltage dynamics of the VSC grid-connected system and dynamics of the PLL; and takes an overvoltage limit ratio as an index, and implements identification of a dominant voltage constraint by considering an overvoltage limit. The embodiments of the disclosure may provide strong support for safety and stability analysis and control of the high-proportion new energy power system. The method 100 for identifying a dominant overvoltage of a high-proportion new energy power system provided by the embodiment of the disclosure starts from operation 101. At 101, a voltage amplitude of a new energy terminal and a voltage amplitude of an alternating-current (AC) bus at any moment after faults of the new energy terminal and the AC bus are cleared, are determined respectively.

Preferably, the operation of determining the voltage amplitude of the new energy terminal and the voltage amplitude of the AC bus at any moment after faults of the new energy terminal and the AC bus are cleared respectively, includes the following formulas:

$$U_r(t) = \sqrt{\left(u_r^d(t)\right)^2 + \left(u_r^q(t)\right)^2}$$
$$= \sqrt{U_g^2 - 2U_g\omega_{pll}(t)L_\Sigma \cos(\delta_{pll}(t)) + \left(\omega_{pll}(t)L_\Sigma\right)^2} \quad (1)$$

$$U_s(t) = \sqrt{\left(u_s^d(t)\right)^2 + \left(u_s^q(t)\right)^2}$$
$$= \sqrt{U_g^2 - 2U_g\omega_{pll}(t)L_g \cos(\delta_{pll}(t)) + \left(\omega_{pll}(t)L_g\right)^2} \quad (2)$$

here $U_r(t)$ is a voltage amplitude of the new energy terminal at a moment t; $u_r^q(t)$ is a q-axis component of a voltage of the new energy terminal at the moment t; $u_r^d(t)$ is a d-axis component of the voltage of the new energy terminal at the moment t; $U_g$ is an electromotive force of an equivalent power supply of an AC power grid; $\omega_{pll}(t)$ is an angular frequency of a PLL at the moment t; $\delta_{pll}(t)$ is a phase locked angle of the PLL at the moment t; $L_\Sigma$ is an equivalent reactance from the new energy terminal to an infinite power supply; $U_s(t)$ is a voltage amplitude of the AC bus at the moment t; $u_s^q(t)$ is a q-axis component of a voltage of the AC bus at the moment t; $u_s^d(t)$ is a d-axis component of the voltage of the AC bus at the moment t; and $L_g$ is an equivalent reactance from the AC bus to the infinite power supply.

VSC is a commonly used grid-connected interface of a new energy power generation device. The embodiment of the disclosure establishes a VSC grid-connected system model which considers dynamics of the PLL, as shown in FIG. 2. A voltage equation thereof is:

$$\begin{cases} u_r^d = u_g^d + i_c^q(\omega_{pll}L_\Sigma) \\ u_r^q = -u_g^q - i_c^d(\omega_{pll}L_\Sigma) \end{cases} \quad (3)$$

here $i_c$ is an input current; $u_r$, $u_s$ and $u_g$ are a voltage of the new energy terminal, a voltage of the AC bus and an electromotive force of an equivalent power supply of an AC power grid, respectively; and $L_c$, $L_r$ and $L_g$ are an equivalent inductance of a filter, a grid-connected inductance and an equivalent inductance of a receiving end grid, respectively.

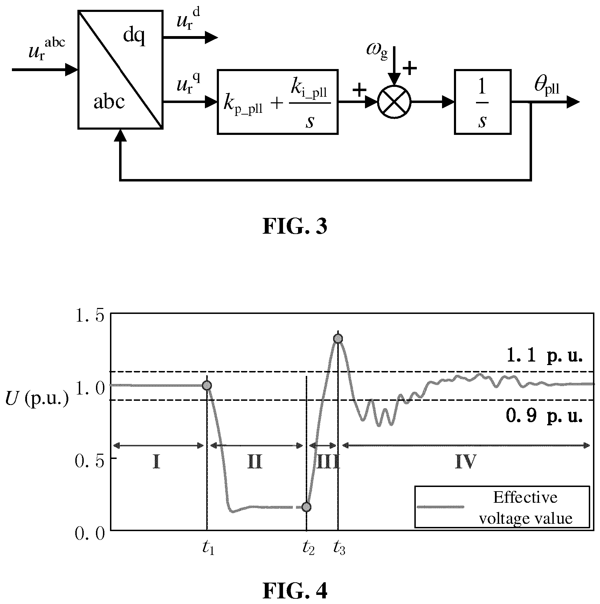

VSC adopts a grid voltage orientation based on the PLL. A topology diagram of a control link of the PLL is shown in FIG. 3, and a control system equation thereof is:

$$\begin{cases} \dot{\theta}_{pll} = \omega_{pll} \\ \omega_{pll} = k_{p\_pll}u_r^q + k_{i\_pll}u_r^q \end{cases} \quad (4)$$

here $\theta_{pll}$ is a phase-locked angle of the PLL, $k_{p\_pll}$ and $k_{i\_pll}$ are PI parameters of the PLL, $u_r^q$ is a q-axis component of a voltage of the new energy terminal. In the embodiment of the disclosure, a "dot" added above a letter represents calculation of a derivative of a variable represented by the letter with respect to time, for example, $x$ represents calculation of a derivative of x with respect to time.

In the embodiment of the disclosure, a control strategy for overvoltage occurred to the VSC grid-connected system is analyzed.

Uncoordinated control of a new energy generation device with a characteristic of reactive power control in a large disturbance transient process is a main cause of overvoltage occurred to the VSC grid-connected system. The embodiment of the disclosure is based on state switching of a VSC control outer loop at a grid side of the new energy power generation device, and divides the large disturbance transient process into four stages, as shown in FIG. 4.

Stage I: a stable operation state ($t<t_1$). At this stage, the VSC grid-connected system operates in a rated state, the electromotive force of the equivalent power supply of the AC power grid $U_g = 1.0$ p.u., and the control outer loop is in a put-in state. Under the stable operation state, an active power $P_r$ and reactive power $Q_r$ injected by VSC into a power system are 1.0 p.u. and 0 respectively. Therefore, there are the following assumptions: $i_r^d = -1.0$, and $i_r^q = 0$.

Stage II: a low voltage crossing state ($t_1 < t < t_2$). A large disturbance fault occurs to the VSC grid-connected system at a moment $t_1$, which causes voltage at a grid-connected point dropping rapidly, and the VSC grid-connected system enters the low voltage crossing state due to a too low voltage caused by dropping, until the large disturbance fault is cleared at a moment $t_2$, here a dropping degree of the voltage of the new energy terminal is related to factors such as a fault type, a fault degree, etc. As an example, at this stage, the electromotive force of the equivalent power supply of the AC power grid $U_g = 0.1$ p.u., and the control outer loop is in a cut-out state. The active power $P_r$ and reactive power $Q_r$ injected by VSC into the power system are 0 p.u. and 1.0 p.u., respectively. Therefore, there are the following assumptions: $i_r^d = 0$, and $i_r^q = -1.0$. It should be noted that the VSC grid-connected system will experience a brief stage where the voltage of the terminal is greater than 0.9 p.u. in an initial stage of the fault. Because the voltage drops rapidly, duration of this stage is relatively short, and overvoltage discussed in the embodiment of the disclosure often does not occur in this stage, thus an impact of this process may be ignored.

Stage III: an initial stage after the fault is cleared ($t_2 < t < t_3$). The VSC grid-connected system enters a fault recovery stage at a moment $t_2$, and due to impacts of voltage measurement, feedback and other links, the control outer loop of the new energy power generation device may be delayed by about 20 ms to put-in again, that is, at a moment $t_3$. As an example, at this stage, the electromotive force of the equivalent power supply of the AC power grid $U_g = 1.0$ p.u., and the control outer loop is in a cut-out state. The active power $P_r$ and reactive power $Q_r$ injected by VSC into the power system are 0 p.u. and 1.0 p.u., respectively. Therefore, there are the following assumptions: $i_r^d = 0$, and $i_r^q = -1.0$. Generally speaking, overvoltage of the VSC grid-connected system is often caused by uncoordinated reactive power control of the new energy power generation device, which often occurs in stage III.

Stage IV: restoring to the stable operation state ($t > t_3$). The VSC grid-connected system makes the control outer loop to put-in again at the moment $t_3$, and the active power $P_r$ and reactive power $Q_r$ injected by VSC into the power system are 1.0 p.u. and 0 respectively. Therefore, there are the following assumptions: $i_r^d = -1.0$, and $i_r^q = 0$. After undergoing a power oscillation, the VSC grid-connected system returns to the rated operation state.

Furthermore, some new energy power generation devices may recognize a high voltage crossing state since they are equipped with corresponding control strategies for high voltage crossing. However, considering delay effects of voltage measurement, feedback and other links, the strategies for the high voltage crossing will actually function by delaying to stage IV, without making any impact on stage III.

Therefore, in the embodiment of the disclosure, an analytical expression between overvoltage dynamics and PLL dynamics of the new energy terminal and the AC bus in stage III is established.

1. Analytical expression between overvoltage dynamics and PLL dynamics of the new energy terminal in stage III

After the large disturbance fault occurs to the system, the VSC grid-connected system generates overvoltage due to short-time reactive power surplus in stage III. Based on the current assumptions of stage III, the equation (3) may be simplified as:

$$\begin{cases} u_r^d = u_g^d - \omega_{pll} L_\Sigma \\ u_r^q = -u_g^q \end{cases} \quad (5)$$

Therefore, a voltage amplitude $U_r$ of the new energy terminal may be expressed by:

$$U_r(t) = \sqrt{\left(u_r^d(t)\right)^2 + \left(u_r^q(t)\right)^2}$$
$$= \sqrt{U_g^2 - 2U_g \omega_{pll}(t) L_\Sigma \cos(\delta_{pll}(t)) + \left(\omega_{pll}(t) L_\Sigma\right)^2} \quad (6)$$

2. Analytical expression between overvoltage dynamics and PLL dynamics of an AC device in stage III

Taking an AC bus as an example, a voltage amplitude $U_s$ of the AC bus after a large disturbance is cleared, is expressed by:

$$U_s(t) = \sqrt{\left(u_s^d(t)\right)^2 + \left(u_s^q(t)\right)^2}$$
$$= \sqrt{U_g^2 - 2U_g\omega_{pll}(t)L_g \cos(\delta_{pll}(t)) + \left(\omega_{pll}(t)L_g\right)^2} \qquad (7)$$

here $U_r(t)$ is a voltage amplitude of the new energy terminal at a moment t; $u_r^q(t)$ is a q-axis component of a voltage of the new energy terminal at the moment t; $u_r^d(t)$ is a d-axis component of the voltage of the new energy terminal at the moment t; $U_g$ is an electromotive force of an equivalent power supply of an AC power grid; $\omega_{pll}(t)$ is an angular frequency of a PLL at the moment t; $\delta_{pll}(t)$ is a phase locked angle of the PLL at the moment t; $L_\Sigma$ is an equivalent reactance from the new energy terminal to an infinite power supply; $U_s(t)$ is a voltage amplitude of the AC bus at the moment t; $u_s^q(t)$ is a q-axis component of a voltage of the AC bus at the moment t; $u_s^d(t)$ is a d-axis component of the voltage of the AC bus at the moment t; and $L_g$ is an equivalent reactance from the AC bus to the infinite power supply.

3. Analysis of a correlation relationship among overvoltage dynamics of different devices and buses in the VSC grid-connected system

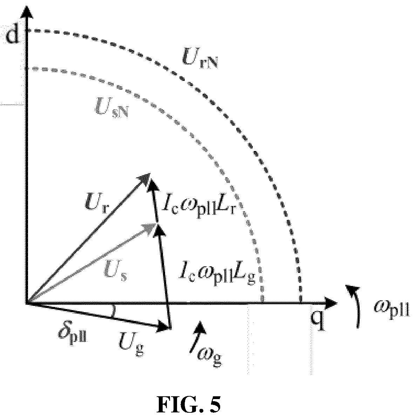

FIG. 5 shows a relationship between main electrical quantities in the VSC grid-connected system, and dynamic processes of the voltage $U_r$ of the new energy terminal and the voltage $U_s$ of the AC bus are similar in a transient process. In FIG. 5, an outermost arc is the voltage amplitude $U_r$ of the new energy terminal, and an inner arc is the voltage amplitude $U_s$ of the AC bus.

At 102, an overvoltage limit ratio is determined according to a ratio of the voltage amplitude of the new energy terminal to the voltage amplitude of the AC bus.

In the embodiment of the disclosure, the overvoltage limit ratio is determined according to a ratio of the voltage amplitude of the new energy terminal to the voltage amplitude of the AC bus, to determine a device and AC bus to which voltage-exceeding-limit firstly occurs, of the VSC grid-connected system, that is, to determine the dominant voltage safety constraint. The embodiment of the disclosure defines the ratio of the voltage amplitude $U_r$ of the new energy terminal to the voltage amplitude $U_s$ of the AC bus as the overvoltage limit ratio $N$.

At 103, a critical overvoltage limit ratio is determined.

The operation of determining the critical overvoltage limit ratio includes the following formula:

$$N_m = \sqrt{1 + \frac{L_r}{L_g} - \left[\frac{L_r U_g^2}{L_g} - \omega_g^2(L_r^2 + L_r L_g)\right]\frac{1}{U_{sN}^2}} \qquad (8)$$

here $N_m$ is the critical overvoltage limit ratio; $L_r$ is an equivalent reactance between the new energy terminal and the AC bus; $U_g$ is an electromotive force of an equivalent power supply of an AC power grid; $\omega_g$ is an angular frequency of the AC power grid; $L_g$ is an equivalent reactance from the AC bus to an infinite power supply; and $U_{sN}$ is a preset overvoltage limit value of the AC bus.

In the embodiment of the disclosure, in case that the voltage amplitude $U_r$ of the new energy terminal (or the voltage amplitude $U_s$ of the AC bus) does not exceed a maximum bearable voltage value $U_{r\_max}$ (or $U_{s\_max}$), the device and bus to which overvoltage-exceeding-limit occurs, of the power system are related to the overvoltage limit ratio $N$. It is assumed that when $N=N_m$, the voltage $U_r$ of the new energy terminal and the voltage $U_s$ of the AC bus reach their respective voltage safety constraints simultaneously, and the critical overvoltage limit ratio $N_m$ is expressed by:

$$N_m = \sqrt{1 + \frac{L_r}{L_g} - \left[\frac{L_r U_g^2}{L_g} - \omega_g^2(L_r^2 + L_r L_g)\right]\frac{1}{U_{sN}^2}} \qquad (9)$$

here $N_m$ is the critical overvoltage limit ratio; $L_r$ is an equivalent reactance between the new energy terminal and the AC bus; $U_g$ is an electromotive force of an equivalent power supply of an AC power grid; $\omega_g$ is an angular frequency of the AC power grid; $L_g$ is an equivalent reactance from the AC bus to an infinite power supply; and $U_{sN}$ is a preset overvoltage limit value of the AC bus.

At 104, a maximum new energy terminal voltage value and a maximum AC bus voltage value bearable for the new energy terminal and the AC bus are determined respectively.

Preferably, the operation of determining the maximum new energy terminal voltage value and the maximum AC bus voltage value bearable for the new energy terminal and the AC bus respectively includes the following formulas:

$$U_{r\_max} = \sqrt{U_g^2 + 2U_g \omega_g L_\Sigma + \left(\omega_g L_\Sigma\right)^2} \quad (10)$$

$$U_{s\_max} = \sqrt{U_g^2 + 2U_g \omega_g L_g + \left(\omega_g L_g\right)^2} \quad (11)$$

here $U_{r\_max}$ is the maximum new energy terminal voltage value; $U_{s\_max}$ is the maximum AC bus voltage value; $U_g$ is an electromotive force of an equivalent power supply of an AC power grid; $\omega_g$ is an angular frequency of the AC power grid; $L_\Sigma$ is an equivalent reactance from the new energy terminal to an infinite power supply; and $L_g$ is an equivalent reactance from the AC bus to the infinite power supply.

At 105, identification of a dominant voltage safety constraint is performed according to the overvoltage limit ratio, the critical overvoltage limit ratio, the maximum new energy terminal voltage value and the maximum AC bus voltage value, and an identification result is determined.

The operation of performing identification of the dominant voltage safety constraint according to the overvoltage limit ratio, the critical overvoltage limit ratio, the maximum new energy terminal voltage value and the maximum AC bus voltage value, and determining the identification result includes the following operations.

It is determined that voltage-exceeding-limit firstly occurs to the new energy terminal, in response to that the voltage amplitude of the new energy terminal is less than or equal to the maximum new energy terminal voltage value, and the overvoltage limit ratio is less than or equal to 1.

It is determined that the voltage-exceeding-limit firstly occurs to the new energy terminal, in response to that the voltage amplitude of the new energy terminal is less than or equal to the maximum new energy terminal voltage value, and the overvoltage limit ratio is greater than 1 and less than the critical overvoltage limit ratio.

It is determined that the voltage-exceeding-limit simultaneously occurs to the new energy terminal and the AC bus, in response to that the voltage amplitude of the new energy terminal is less than or equal to the maximum new energy terminal voltage value, and the overvoltage limit ratio is equal to the critical overvoltage limit ratio.

It is determined that the voltage-exceeding-limit firstly occurs to the AC bus, in response to that the voltage amplitude of the AC bus is less than or equal to the maximum AC bus voltage value, and the overvoltage limit ratio is greater than the critical overvoltage limit ratio.

In the embodiment of the disclosure, the dominant voltage safety constraint of the high-proportion new energy power system is identified based on the overvoltage limit ratio N. Exemplarily, the following type 1, type 2, type 3 and type 4 are included.

Type 1: when $U_r \leq U_{r\_max}$ and $N \leq 1$, in this type, the voltage amplitude $U_r$ of the new energy terminal is less than or equal to the voltage amplitude $U_s$ of the AC bus. It may be known from the vector relationship between electrical quantities in FIG. 5 that the voltage-exceeding-limit firstly occurs to the new energy terminal, and is constrained by an overvoltage protection setting value $U_{rN}$ of the new energy terminal.

Type 2: when $U_r \leq U_{r\_max}$ and $1 < N < N_m$, it may be known from the above descriptions that a protection action triggered by overvoltage under this configuration strategy firstly occurs to the new energy terminal and is constrained by the voltage amplitude $U_r$ of the new energy terminal.

Type 3: when $U_r \leq U_{r\_max}$ and $N = N_m$, under this protection configuration strategy, transient voltage rise of the new energy terminal and the AC bus caused by disturbance will simultaneously reach their respective overvoltage limits.

Type 4: when $U_s \leq U_{s\_max}$ and $N > N_m$, a protection action triggered by overvoltage under this configuration strategy firstly occurs to the AC bus and is constrained by the voltage amplitude $U_s$ of the AC bus.

Furthermore, in case that $U_r$ (or $U_s$) exceeds the maximum bearable voltage value $U_{r\_max}$ (or $U_{s\_max}$), the overvoltage limit is invalid. In summary, a method for identifying a dominant constraint based on the overvoltage limit ratio is shown in Table 1.

The embodiment of the disclosure focuses on an overvoltage problem caused after clearing the large disturbance fault of the high-proportion new energy power system. The embodiment of the disclosure takes a VSC grid-connected system as a research object, establishes a voltage analytical calculation model which considers dynamic characteristics of a PLL, and reveals a correlation relationship between voltage dynamics of the VSC grid-connected system and dynamics of the PLL; and proposes an overvoltage limit ratio as an index, and implements identification of a dominant overvoltage constraint by considering an overvoltage limit. Relevant research results may provide strong support for safety and stability analysis and control of the high-proportion new energy power system.

One possible implementation process applicable to the embodiment of the disclosure is described below, and may include the following operations 1 to 4.

Operation 1, a correlation relationship between voltage dynamics of the VSC grid-connected system and dynamics of the PLL is analyzed, and an analytical expression which may characterize the correlation relationship is established.

Operation 2, a control strategy of the VSC grid-connected system during a large disturbance transient is analyzed, and a stage where overvoltage occurs is identified.

Operation 3, a coupling relationship among overvoltage of different devices and buses of the high-proportion new energy power system is analyzed, and an analytical expression between voltage dynamics and dynamics of the PLL in the overvoltage stage is established.

Operation 4, an overvoltage limit ratio is calculated, and a dominant overvoltage constraint of the high-proportion new energy power system is determined based on the overvoltage limit ratio.

In an actual engineering practice, in order to prevent irreversible damages such as insulation breakdown, electrical stress tension, or the like from occurring to the new energy power generation device due to overvoltage, the overvoltage protection setting value of the new energy terminal is usually set to $U_{rN} = 1.3$ p.u.; an insulation limit $U_{sN}$ for overvoltage of the AC bus is usually set as the following formula:

$$U_{sN} = \frac{k_s \times U_I}{U_B} \qquad (12)$$

In the formula, $U_I$ is a highest operation voltage at a voltage level of the AC bus; $U_B$ is a reference voltage; and $k_s$ is an overvoltage capability coefficient. Taking 110kV AC bus as an example,

$$U_{sN} = \frac{1.3 \times 121}{115} = 1.367 \text{p.u} \qquad (13)$$

It may be obtained that an overvoltage limit ratio N=0.955 under this overvoltage protection configuration strategy. It may be known from Table 1 that the new energy terminal firstly reaches its overvoltage protection setting value, which triggers a rapid terminal tripping action, and a dominant voltage safety constraint is a voltage of the new energy terminal.

Table 1

| Overvoltage limit ratio | Range of overvoltage limit | Position of dominant voltage safety constraint | Dominant factors of boundary |
|---|---|---|---|
| $N{\leq}1$ | $U_{rN}{\leq}U_{r\_max}$ | new energy terminal | protection setting value of the terminal |
| | $U_{rN}{>}U_{r\_max}$ | overvoltage limit is invalid | |
| $1{<}N{<}Nm$ | $U_{rN}{\leq}U_{r\_max}$ | new energy terminal | protection setting value of the terminal |
| | $U_{rN}{>}U_{r\_max}$ | overvoltage limit is invalid | |
| $N{=}Nm$ | $U_{rN}{\leq}U_{r\_max}$ | new energy terminal, bus | dominate simultaneously |
| | $U_{rN}{>}U_{r\_max}$ | overvoltage limit is invalid | |
| $N{>}Nm$ | $U_{rN}{\leq}U_{r\_max}$ | bus | insulation limit of the bus |
| | $U_{rN}{>}U_{r\_max}$ | overvoltage limit is invalid | |

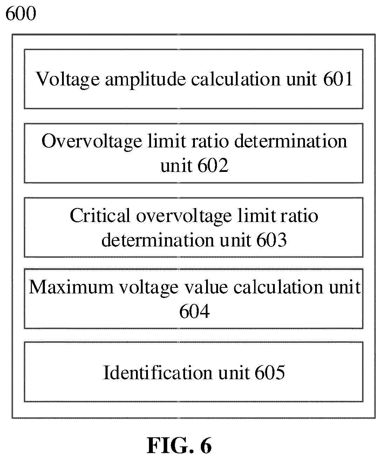

FIG. 6 is a schematic structural diagram of a system 600 for identifying a dominant overvoltage of a high-proportion new energy power system according to an embodiment of the disclosure. As shown in FIG. 6, the system 600 for identifying a dominant overvoltage of a high-proportion new energy power system provided by the embodiment of the disclosure includes a voltage amplitude calculation unit 601, an overvoltage limit ratio determination unit 602, a critical overvoltage limit ratio determination unit 603, a maximum voltage value calculation unit 604 and an identification unit 605.

The voltage amplitude calculation unit 601 is configured to determine a voltage amplitude of a new energy terminal and a voltage amplitude of an AC bus at any moment after faults of the new energy terminal and the AC bus are cleared respectively.

Preferably, the voltage amplitude calculation unit 601 is specifically configured to determine the voltage amplitude of the new energy terminal and the voltage amplitude of the AC bus at any moment after faults of the new energy terminal and the AC bus are cleared respectively according to the following formulas (14) and (15):

$$U_r(t) = \sqrt{\left(u_r^d(t)\right)^2 + \left(u_r^q(t)\right)^2}$$
$$= \sqrt{U_g^2 - 2U_g\omega_{pll}(t)L_\Sigma \cos(\delta_{pll}(t)) + \left(\omega_{pll}(t)L_\Sigma\right)^2} \qquad (14)$$

$$U_s(t) = \sqrt{\left(u_s^d(t)\right)^2 + \left(u_s^q(t)\right)^2}$$
$$= \sqrt{U_g^2 - 2U_g\omega_{pll}(t)L_g \cos(\delta_{pll}(t)) + \left(\omega_{pll}(t)L_g\right)^2} \qquad (15)$$

here $U_r(t)$ is a voltage amplitude of the new energy terminal at a moment t; $u_r^q(t)$ is a q-axis component of a voltage of the new energy terminal at the moment t; $u_r^d(t)$ is a d-axis component of the voltage of the new energy terminal at the moment t; $U_g$ is an electromotive force of an equivalent power supply of an AC power grid; $\omega_{pll}(t)$ is an angular frequency of a PLL at the moment t; $\delta_{pll}(t)$ is a phase locked angle of the PLL at the moment t; $L_\Sigma$ is an equivalent reactance from the new energy terminal to an infinite power supply; $U_s(t)$ is a voltage amplitude of the AC bus at the moment t; $u_s^q(t)$ is a q-axis component of a voltage of the AC bus at the moment t; $u_s^d(t)$ is a d-axis component of the voltage of the AC bus at the moment t; and $L_g$ is an equivalent reactance from the AC bus to the infinite power supply.

The overvoltage limit ratio determination unit 602 is configured to determine an overvoltage limit ratio according to a ratio of the voltage amplitude of the new energy terminal to the voltage amplitude of the AC bus.

The critical overvoltage limit ratio determination unit 603 is configured to determine a critical overvoltage limit ratio.

The critical overvoltage limit ratio determination unit 603 is specifically configured to determine the critical overvoltage limit ratio according to the following formula (16):

$$N_m = \sqrt{1 + \frac{L_r}{L_g} - \left[\frac{L_r U_g^2}{L_g} - \omega_g^2(L_r^2 + L_r L_g)\right]\frac{1}{U_{sN}^2}} \qquad (16)$$

here $N_m$ is the critical overvoltage limit ratio; $L_r$ is an equivalent reactance between the new energy terminal and the AC bus; $U_g$ is an electromotive force of an equivalent power supply of an AC power grid; $\omega_g$ is an angular frequency of the AC power grid; $L_g$ is an equivalent reactance from the AC bus to an infinite power supply; and $U_{sN}$ is a preset overvoltage limit value of the AC bus.

The maximum voltage value calculation unit 604 is configured to determine a maximum new energy terminal voltage value and a maximum AC bus voltage value bearable for the new energy terminal and the AC bus respectively.

Preferably, the maximum voltage value calculation unit 604 is specifically configured to determine the maximum new energy terminal voltage value and the maximum AC bus voltage value bearable for the new energy terminal and the AC bus respectively according to the following formulas (17) and (18):

$$U_{r\_max} = \sqrt{U_g^2 + 2U_g\omega_g L_\Sigma + \left(\omega_g L_\Sigma\right)^2} \qquad (17)$$

$$U_{s\_max} = \sqrt{U_g^2 + 2U_g\omega_g L_g + \left(\omega_g L_g\right)^2} \qquad (18)$$

here $U_{r\_max}$ is the maximum new energy terminal voltage value; $U_{s\_max}$ is the maximum AC bus voltage value; $U_g$ is an electromotive force of an equivalent power supply of an AC power grid; $\omega_g$ is an angular frequency of the AC power grid; $L_\Sigma$ is an equivalent reactance from the new energy terminal to an infinite power supply; and $L_g$ is an equivalent reactance from the AC bus to the infinite power supply.

The identification unit 605 is configured to perform identification of a dominant voltage safety constraint according to the overvoltage limit ratio, the critical overvoltage limit ratio, the maximum new energy terminal voltage value and the maximum AC bus voltage value, and determine an identification result.

The identification unit 605 configured to perform identification of the dominant voltage safety constraint according to the overvoltage limit ratio, the critical overvoltage limit ratio, the maximum new energy terminal voltage value and the maximum AC bus voltage value, and determine the identification result, includes that the identification unit is configured to:

determine that voltage-exceeding-limit firstly occurs to the new energy terminal, in response to that the voltage amplitude of the new energy terminal is less than or equal to the maximum new energy terminal voltage value, and the overvoltage limit ratio is less than or equal to 1;

determine that the voltage-exceeding-limit firstly occurs to the new energy terminal, in response to that the voltage amplitude of the new energy terminal is less than or equal to the maximum new energy terminal voltage value, and the overvoltage limit ratio is greater than 1 and less than the critical overvoltage limit ratio;

determine that the voltage-exceeding-limit simultaneously occurs to the new energy terminal and the AC bus, in response to that the voltage amplitude of the new energy terminal is less than or equal to the maximum new energy terminal voltage value, and the overvoltage limit ratio is equal to the critical overvoltage limit ratio; and

determine that the voltage-exceeding-limit firstly occurs to the AC bus, in response to that the voltage amplitude of the AC bus is less than or equal to the maximum AC bus voltage value, and the overvoltage limit ratio is greater than the critical overvoltage limit ratio.

The system 600 for identifying a dominant overvoltage of a high-proportion new energy power system according to the embodiment of the disclosure corresponds to the method 100 for identifying a dominant overvoltage of a high-proportion new energy power system according to another embodiment of the disclosure, and will not be elaborated here.

According to another aspect of the embodiments of the disclosure, an embodiment of the disclosure provides a computer-readable storage medium, having stored thereon a computer program, the program implements any one of operations of the method for identifying a dominant overvoltage of a high-proportion new energy power system when the program is executed by a processor.

According to another aspect of the embodiments of the disclosure, an embodiment of the disclosure provides an electronic device, the electronic device includes the above computer-readable storage medium and one or more processors configured to execute the program in the computer-readable storage medium.

According to another aspect of the embodiments of the disclosure, an embodiment of the disclosure provides a computer program product, the computer program product includes a computer instruction, the computer instruction enables a computer device to perform operations of the above method for identifying a dominant overvoltage of a high-proportion new energy power system when the computer instruction is executed on the computer device.

The disclosure has been described with reference to a few embodiments. However, it is well known by those skilled in the art that other embodiments of the disclosure except the above disclosed embodiments fall within the scope of the disclosure equivalently, as limited by the appended patent claims.

In general, all terms used in the claims are interpreted according to their ordinary meanings in the technical field, unless otherwise explicitly defined there. All references to "a/the/these [device, component, etc.]" are openly interpreted as at least one instance of the device, component, etc., unless otherwise explicitly stated. It is unnecessary for the operations of any method disclosed here to be executed in the exact orders as disclosed, unless explicitly stated.

It may be understood by those skilled in the art that the embodiments of the disclosure may be provided as methods, systems or computer program products. Therefore, the disclosure may take forms of embodiments with entire hardware, embodiments with entire software, or embodiments combining software with hardware aspects. Furthermore, the disclosure may take a form of a computer program product implemented on one or more computer-available storage media (including, but not limited to a disk storage, a Compact Disk Read Only Memory (CD-ROM), an optical storage, etc.) containing computer-available program codes.

The disclosure is described with reference to flowcharts and/or block diagrams of methods, devices (systems) and computer program products according to the embodiments of the disclosure. It should be understood that computer program instructions may implement each flow and/or block in the flowcharts and/or the block diagrams, as well as combinations of flows and/or blocks in the flowcharts and/or the block diagrams. These computer program instructions may be provided to a processor of a general purpose computer, a specialized computer, an embedded processor or another programmable data processing device to generate a machine, such that instructions executed by the processor of the computer or another programmable data processing device generate a device configured to implement functions specified in one or more flows of the flowcharts and/or one or more blocks of the block diagrams.

These computer program instructions may also be stored in a computer-readable memory which may guide a computer or another programmable data processing device to operate in a specific manner, such that the instructions stored in the computer-readable memory generate a manufactured product including an instruction device, and the instruction device implements functions specified in one or more flows of the flowcharts and/or one or more blocks of the block diagrams.

These computer program instructions may also be loaded onto a computer or another programmable data processing device, such that a series of operations are executed on the computer or another programmable device to generate computer-implemented processing, and thus the instructions executed on the computer or another programmable device provide operations for implementing functions specified in one or more flows of the flowcharts and/or one or more blocks of the block diagrams.

Finally, it should be noted that the above embodiments and examples are only intended to explain technical solutions of the disclosure and are not intended to limit the technical solutions. Although the disclosure has been described in detail with reference to the above embodiments and examples, it should be understood by those of ordinary skill in the art that modifications or equivalent replacements may be still made to specific embodiments and examples of the disclosure, the invention being defined by the appended claims.

## Claims

1. A method (100) for identifying a dominant overvoltage of a high-proportion new energy power system, comprising:

determining (101) a voltage amplitude ($U_r$) of a new energy terminal and a voltage amplitude ($U_s$) of an alternating-current (AC) bus respectively at any moment after a fault of the high-proportion new energy power system is cleared;
determining (102) an overvoltage limit ratio (N) according to a ratio of the voltage amplitude of the new energy terminal to the voltage amplitude of the AC bus;
determining (103) a critical overvoltage limit ratio ($N_m$);
determining (104) a maximum new energy terminal voltage value ($U_{r\_max}$) and a maximum AC bus voltage value ($U_{s\_max}$) bearable for the new energy terminal and the AC bus respectively; and
performing (105) identification of a dominant voltage safety constraint according to the overvoltage limit ratio, the critical overvoltage limit ratio, the maximum new energy terminal voltage value and the maximum AC bus voltage value, and determining an identification result;
**characterized in that**:

determining (103) the critical overvoltage limit ratio comprises expressing said critical overvoltage limit ratio as:

$$N_{\mathrm{m}} = \sqrt{1 + \frac{L_{\mathrm{r}}}{L_{\mathrm{g}}} - [\frac{L_{\mathrm{r}} U_{\mathrm{g}}^{'2}}{L_{\mathrm{g}}} - \omega_{\mathrm{g}}^2 (L_{\mathrm{r}}^2 + L_{\mathrm{r}} L_{\mathrm{g}})] \frac{1}{U_{\mathrm{sN}}^2}}$$

wherein $N_{\mathrm{m}}$ is the critical overvoltage limit ratio; $L_{\mathrm{r}}$ is an equivalent reactance between the new energy terminal and the AC bus; $U_{\mathrm{g}}$ is an electromotive force of an equivalent power supply of an AC power grid; $\omega_{\mathrm{g}}$ is an angular frequency of the AC power grid; $L_{\mathrm{g}}$ is an equivalent reactance from the AC bus to an infinite power supply; and $U_{\mathrm{sN}}$ is a preset overvoltage limit value of the AC bus; and
performing (105) identification of the dominant voltage safety constraint according to the overvoltage limit ratio, the critical overvoltage limit ratio, the maximum new energy terminal voltage value and the maximum AC bus voltage value, and determining the identification result comprises:

determining that voltage-exceeding-limit firstly occurs to the new energy terminal, in response tothatthe voltage amplitude of the new energy terminal being less than or equal to the maximum new energy terminal voltage value, and the overvoltage limit ratio being less than or equal to 1;
determining that the voltage-exceeding-limit firstly occurs to the new energy terminal, in response to the voltage amplitude of the new energy terminal being less than or equal to the maximum new energy terminal voltage value, and the overvoltage limit ratio being greater than 1 and less than the critical overvoltage limit ratio;
determining that the voltage-exceeding-limit simultaneously occurs to the new energy terminal and the AC bus, in response to the voltage amplitude of the new energy terminal being less than or equal to the maximum new energy terminal voltage value, and the overvoltage limit ratio being equal to the critical overvoltage limit ratio; and
determining that the voltage-exceeding-limit firstly occurs to the AC bus, in response to the voltage amplitude of the AC bus being less than or equal to the maximum AC bus voltage value, and the overvoltage limit ratio being greater than the critical overvoltage limit ratio.

2. The method of claim 1, wherein determining (101) the voltage amplitude of the new energy terminal and the voltage amplitude of the AC bus at any moment after faults of the new energy terminal and the AC bus are cleared respectively, comprises:

$$U_{\mathrm{r}}(t) = \sqrt{\left(u_{\mathrm{r}}^{\mathrm{d}}(t)\right)^2 + \left(u_{\mathrm{r}}^{\mathrm{q}}(t)\right)^2}$$
$$= \sqrt{U_{\mathrm{g}}^2 - 2U_{\mathrm{g}}\omega_{\mathrm{pll}}(t)L_{\Sigma}\cos(\delta_{\mathrm{pll}}(t)) + \left(\omega_{\mathrm{pll}}(t)L_{\Sigma}\right)^2}$$

$$U_{\mathrm{s}}(t) = \sqrt{\left(u_{\mathrm{s}}^{\mathrm{d}}(t)\right)^2 + \left(u_{\mathrm{s}}^{\mathrm{q}}(t)\right)^2}$$
$$= \sqrt{U_{\mathrm{g}}^2 - 2U_{\mathrm{g}}\omega_{\mathrm{pll}}(t)L_{\mathrm{g}}\cos(\delta_{\mathrm{pll}}(t)) + \left(\omega_{\mathrm{pll}}(t)L_{\mathrm{g}}\right)^2}$$

wherein $U_r(t)$ is a voltage amplitude of the new energy terminal at a moment t; $u_{\mathrm{r}}^{\mathrm{q}}(t)$ is a q-axis component of a voltage of the new energy terminal at the moment t; $u_{\mathrm{r}}^{\mathrm{d}}(t)$ is a d-axis component of the voltage of the new energy terminal at the moment t; $U_g$ is an electromotive force of an equivalent power supply of an AC power grid; $\omega_{\mathrm{pll}}(t)$ is an angular frequency of a phase locked loop (PLL) at the moment t; $\delta_{\mathrm{pll}}(t)$ is a phase locked angle of the PLL at the moment t; $L_\Sigma$ is an equivalent reactance from the new energy terminal to an infinite power supply; $U_s(t)$ is a voltage amplitude of the AC bus at the moment t; $u_{\mathrm{s}}^{\mathrm{q}}(t)$ is a q-axis component of a voltage of the AC bus at the moment t; $u_{\mathrm{s}}^{\mathrm{d}}(t)$ is a d-axis component of the voltage of the AC bus at the moment t; and $L_g$ is an equivalent reactance from the AC bus to the infinite power supply.

3. The method of claim 1, wherein determining (104) the maximum new energy terminal voltage value and the maximum AC bus voltage value bearable for the new energy terminal and the AC bus respectively comprises:

$$U_{\mathrm{r\_max}} = \sqrt{U_{\mathrm{g}}^2 + 2U_{\mathrm{g}}\omega_{\mathrm{g}}L_{\Sigma} + \left(\omega_{\mathrm{g}}L_{\Sigma}\right)^2}$$

$$U_{\mathrm{s\_max}} = \sqrt{U_{\mathrm{g}}^2 + 2U_{\mathrm{g}}\omega_{\mathrm{g}}L_{\mathrm{g}} + \left(\omega_{\mathrm{g}}L_{\mathrm{g}}\right)^2}$$

wherein $U_{r\_max}$ is the maximum new energy terminal voltage value; $U_{s\_max}$ is the maximum AC bus voltage value; $U_g$ is an electromotive force of an equivalent power supply of an AC power grid; $\omega_g$ is an angular frequency of the AC power grid; $L_\Sigma$ is an equivalent reactance from the new energy terminal to an infinite power supply; and $L_g$ is an equivalent reactance from the AC bus to the infinite power supply.

4. A system (600) configured to identify a dominant overvoltage of a high-proportion new energy power system, comprising:

   a voltage amplitude calculation unit (601), configured to determine a voltage amplitude ($U_r$) of a new energy terminal and a voltage amplitude ($U_s$) of an alternating-current (AC) bus respectively at any moment after a fault of the high-proportion new energy power system is cleared;
   an overvoltage limit ratio determination unit (602), configured to determine an overvoltage limit ratio (N) according to a ratio of the voltage amplitude of the new energy terminal to the voltage amplitude of the AC bus;
   a critical overvoltage limit ratio determination unit (603), configured to determine a critical overvoltage limit ratio ($N_m$);
   a maximum voltage value calculation unit (604), configured to determine a maximum new energy terminal voltage value ($U_{r\_max}$) and a maximum AC bus voltage value ($U_{s\_max}$) bearable for the new energy terminal and the AC bus respectively; and

an identification unit (605), configured to perform identification of a dominant voltage safety constraint according to the overvoltage limit ratio, the critical overvoltage limit ratio, the maximum new energy terminal voltage value and the maximum AC bus voltage value, and determine an identification result;

**characterized in that**

the critical overvoltage limit ratio determination unit (603) is specifically configured to determine the critical overvoltage limit ratio by a formula:

$$N_{\mathrm{m}} = \sqrt{1 + \frac{L_{\mathrm{r}}}{L_{\mathrm{g}}} - [\frac{L_{\mathrm{r}} U_{\mathrm{g}}^{\prime 2}}{L_{\mathrm{g}}} - \omega_{\mathrm{g}}^2 (L_{\mathrm{r}}^2 + L_{\mathrm{r}} L_{\mathrm{g}})] \frac{1}{U_{\mathrm{sN}}^2}}$$ ,

wherein $N_{\mathrm{m}}$ is the critical overvoltage limit ratio; $L_{\mathrm{r}}$ is an equivalent reactance between the new energy terminal and the AC bus; $U_{\mathrm{g}}$ is an electromotive force of an equivalent power supply of an AC power grid; $\omega_{\mathrm{g}}$ is an angular frequency of the AC power grid; $L_{\mathrm{g}}$ is an equivalent reactance from the AC bus to an infinite power supply; and $U_{\mathrm{sN}}$ is a preset overvoltage limit value of the AC bus; and

the identification unit (605) is specifically configured to:

determine that voltage-exceeding-limit firstly occurs to the new energy terminal, in response to the voltage amplitude of the new energy terminal being less than or equal to the maximum new energy terminal voltage value, and the overvoltage limit ratio being less than or equal to 1;

determine that the voltage-exceeding-limit firstly occurs to the new energy terminal, in response to the voltage amplitude of the new energy terminal being less than or equal to the maximum new energy terminal voltage value, and the overvoltage limit ratio being greater than 1 and less than the critical overvoltage limit ratio;

determine that the voltage-exceeding-limit simultaneously occurs to the new energy terminal and the AC bus, in response to the voltage amplitude of the new energy terminal being less than or equal to the maximum new energy terminal voltage value, and the overvoltage limit ratio being equal to the critical overvoltage limit ratio; and

determine that the voltage-exceeding-limit firstly occurs to the AC bus, in response to the voltage amplitude of the AC bus being less than or equal to the maximum AC bus voltage value, and the overvoltage limit ratio being greater than the critical overvoltage limit ratio.

5. The system of claim 4, wherein the voltage amplitude calculation unit (601) is specifically configured to determine the voltage amplitude of the new energy terminal and the voltage amplitude of the AC bus at any moment after faults of the new energy terminal and the AC bus are cleared respectively by formulas:

$$U_{\mathrm{r}}(t) = \sqrt{\left(u_{\mathrm{r}}^{\mathrm{d}}(t)\right)^2 + \left(u_{\mathrm{r}}^{\mathrm{q}}(t)\right)^2}$$
$$= \sqrt{U_{\mathrm{g}}^2 - 2U_{\mathrm{g}}\omega_{\mathrm{pll}}(t)L_{\Sigma}\cos(\delta_{\mathrm{pll}}(t)) + \left(\omega_{\mathrm{pll}}(t)L_{\Sigma}\right)^2}$$ ,

$$U_{\mathrm{s}}(t) = \sqrt{\left(u_{\mathrm{s}}^{\mathrm{d}}(t)\right)^2 + \left(u_{\mathrm{s}}^{\mathrm{q}}(t)\right)^2}$$
$$= \sqrt{U_{\mathrm{g}}^2 - 2U_{\mathrm{g}}\omega_{\mathrm{pll}}(t)L_{\mathrm{g}}\cos(\delta_{\mathrm{pll}}(t)) + \left(\omega_{\mathrm{pll}}(t)L_{\mathrm{g}}\right)^2}$$ ,

wherein $U_{\mathrm{r}}(t)$ is a voltage amplitude of the new energy terminal at a moment t; $u_{\mathrm{r}}^{\mathrm{q}}(t)$ is a q-axis component of a voltage of the new energy terminal at the moment t; $u_{\mathrm{r}}^{\mathrm{d}}(t)$ is a d-axis component of the voltage of the new energy terminal at the moment t; $U_{\mathrm{g}}$ is an electromotive force of an equivalent power supply of an AC power grid; $\omega_{\mathrm{pll}}(t)$ is an angular frequency of a phase locked loop (PLL) at the moment t; $\delta_{\mathrm{pll}}(t)$ is a phase locked angle of the PLL at the moment t; $L_{\Sigma}$ is an equivalent reactance from the new energy terminal to an infinite power supply; $U_{\mathrm{s}}(t)$ is a voltage amplitude of the AC bus at the moment t; $u_{\mathrm{s}}^{\mathrm{q}}(t)$ is a q-axis component of a voltage of the AC bus at the moment t;

$u_s^d(t)$ is a d-axis component of the voltage of the AC bus at the moment t; and $L_g$ is an equivalent reactance from the AC bus to the infinite power supply.

6. The system of claim 4, wherein the maximum voltage value calculation unit (604) is specifically configured to determine the maximum new energy terminal voltage value and the maximum AC bus voltage value bearable for the new energy terminal and the AC bus respectively by formulas:

$$U_{r\_max} = \sqrt{U_g^2 + 2U_g\omega_g L_\Sigma + \left(\omega_g L_\Sigma\right)^2},$$

$$U_{s\_max} = \sqrt{U_g^2 + 2U_g\omega_g L_g + \left(\omega_g L_g\right)^2},$$

wherein $U_{r\_max}$ is the maximum new energy terminal voltage value; $U_{s\_max}$ is the maximum AC bus voltage value; $U_g$ is an electromotive force of an equivalent power supply of an AC power grid; $\omega_g$ is an angular frequency of the AC power grid; $L_\Sigma$ is an equivalent reactance from the new energy terminal to an infinite power supply; and $L_g$ is an equivalent reactance from the AC bus to the infinite power supply.

7. A computer-readable storage medium, having stored thereon a computer program, the program comprising instructions which, when executed by a processor, cause the processor to execute the steps of the method of any one of claims 1 to 3.

8. An electronic device, comprising:

the computer-readable storage medium of claim 7; and
one or more processors, configured to execute the program in the computer-readable storage medium.

9. A computer program product, comprising computer instructions, the computer instructions causing a computer device to perform the steps of the method of any one of claims 1 to 3 when the computer instructions are executed on the computer device.

**Patentansprüche**

1. Verfahren (100) zum Identifizieren einer dominanten Überspannung eines Stromversorgungssystems mit hohem Anteil neuer Energie, umfassend:

Bestimmen (101) einer Spannungsamplitude ($U_r$) eines Anschlusses neuer Energie beziehungsweise einer Spannungsamplitude ($U_s$) eines Wechselstrombusses (AC-Bus) zu einem beliebigen Zeitpunkt, nachdem ein Fehler in dem Stromversorgungssystems mit hohem Anteil neuer Energie behoben wurde;
Bestimmen (102) eines Überspannungsgrenzverhältnisses (N) gemäß einem Verhältnis der Spannungsamplitude des Anschlusses neuer Energie zu der Spannungsamplitude des AC-Busses;
Bestimmen (103) eines kritischen Überspannungsgrenzverhältnisses ($N_m$);
Bestimmen (104) eines maximalen Spannungswerts ($U_{r\_max}$) des Anschlusses neuer Energie und eines maximalen AC-Busspannungswerts ($U_{s\_max}$), der für den Anschluss neuer Energie beziehungsweise den AC-Bus tragbar ist; und
Durchführen (105) einer Identifizierung einer dominanten Spannungssicherheitsbeschränkung gemäß dem Überspannungsgrenzverhältnis, dem kritischen Überspannungsgrenzverhältnis, dem maximalen Spannungswert für den Anschluss neuer Energie und dem maximalen AC-Busspannungswert und Bestimmen eines Identifizierungsergebnisses;
**dadurch gekennzeichnet, dass:**

das Bestimmen (103) des kritischen Überspannungsgrenzverhältnisses ein Ausdrücken des kritischen Überspannungsgrenzverhältnisses umfasst als:

$$N_m = \sqrt{1 + \frac{L_r}{L_g} - \left[\frac{L_r U_g^2}{L_g} - \omega_g^2\left(L_r^2 + L_r L_g\right)\right]\frac{1}{U_{sN}^2}},$$

wobei $N_m$ das kritische Überspannungsgrenzverhältnis ist; $L_r$ eine äquivalente Reaktanz zwischen dem Anschluss neuer Energie und dem AC-Bus ist; $U_g$ eine elektromotorische Kraft einer äquivalenten Stromversorgung eines Wechselstromnetzes ist; $\omega_g$ eine Winkelfrequenz des Wechselstromnetzes ist; $L_g$ eine äquivalente Reaktanz von dem AC-Bus zu einer unendlichen Stromversorgung; und $U_{sN}$ ein voreingestellter Überspannungsgrenzwert des AC-Busses ist; und

Durchführen (105) der Identifizierung einer dominanten Spannungssicherheitsbeschränkung gemäß dem Überspannungsgrenzverhältnis, dem kritischen Überspannungsgrenzverhältnis, dem maximalen Spannungswert für den Anschluss neuer Energie und dem maximalen AC-Busspannungswert und wobei das Bestimmen eines Identifizierungsergebnisses umfasst:

> Bestimmen, dass die Spannungsgrenzüberschreitung an dem Anschluss neuer Energie zuerst auftritt, als Reaktion darauf, dass die Spannungsamplitude des Anschlusses neuer Energie kleiner als oder gleich dem maximalen Spannungswert für den Anschluss neuer Energie ist und das Überspannungsgrenzverhältnis kleiner als oder gleich 1 ist;
> Bestimmen, dass die Spannungsgrenzüberschreitung an dem Anschluss neuer Energie zuerst auftritt, als Reaktion darauf, dass die Spannungsamplitude des Anschlusses neuer Energie kleiner als oder gleich dem maximalen Spannungswert für den Anschluss neuer Energie ist und das Überspannungsgrenzverhältnis größer als 1 und kleiner als das Überspannungsgrenzverhältnis ist;
> Bestimmen, dass die Spannungsgrenzüberschreitung an dem Anschluss neuer Energie und an dem AC-Bus gleichzeitig auftritt, als Reaktion darauf, dass die Spannungsamplitude des Anschlusses neuer Energie kleiner als oder gleich dem maximalen Spannungswert für den Anschluss neuer Energie ist und das Überspannungsgrenzverhältnis gleich dem kritischen Überspannungsgrenzverhältnis ist; und
> Bestimmen, dass die Spannungsgrenzüberschreitung an dem AC-Bus zuerst auftritt, als Reaktion darauf, dass die Spannungsamplitude des AC-Busses kleiner als oder gleich dem maximalen AC-Busspannungswert ist und das Überspannungsgrenzverhältnis größer als das kritische Überspannungsgrenzverhältnis ist.

2. Verfahren nach Anspruch 1, wobei das Bestimmen (101) der Spannungsamplitude des Anschlusses neuer Energie und der Spannungsamplitude des AC-Busses zu einem beliebigen Zeitpunkt, nachdem Fehler der Anschlusses neuer Energie beziehungsweise des AC-Busses behoben wurden, umfasst:

$$U_r(t) = \sqrt{\left(u_r^d(t)\right)^2 + \left(u_r^q(t)\right)^2}$$
$$= \sqrt{U_g^2 - 2U_g\omega_{pll}(t)L_\Sigma\cos(\delta_{pll}(t)) + \left(\omega_{pll}(t)L_\Sigma\right)^2},$$

$$U_s(t) = \sqrt{\left(u_s^d(t)\right)^2 + \left(u_s^q(t)\right)^2}$$
$$= \sqrt{U_g^2 - 2U_g\omega_{pll}(t)L_g\cos(\delta_{pll}(t)) + \left(\omega_{pll}(t)L_g\right)^2},$$

wobei $U_r(t)$ eine Spannungsamplitude des Anschlusses neuer Energie zu einem Zeitpunkt t ist; $u_r^q(t)$ eine q-Achsen-Komponente einer Spannung des Anschlusses neuer Energie zu dem Zeitpunkt t ist; $u_r^d(t)$ eine d-Achsen-Komponente der Spannung des Anschlusses neuer Energie zu dem Zeitpunkt t ist; $U_g$ eine elektromotorische Kraft einer äquivalenten Stromversorgung eines Wechselstromnetzes ist; $\omega_{pll}(t)$ eine Winkelfrequenz einer Phasenregelschleife (PLL) zu dem Zeitpunkt t ist; $\delta_{pll}(t)$ ein Phasenregelwinkel der PLL zu dem Zeitpunkt t ist; $L_\Sigma$ eine äquivalente Reaktanz von dem Anschluss neuer Energie zu einer unendlichen Stromversorgung ist; $U_s(t)$ eine Spannungsamplitude des AC-Busses zu dem Zeitpunkt t ist; $u_s^q(t)$ eine q-Achsen-Komponente einer Spannung des AC-Busses

EP 4 350 918 B1

zu dem Zeitpunkt t ist; $u_s^d(t)$ eine d-Achsen-Komponente der Spannung des AC-Busses zu dem Zeitpunkt t ist; und $L_g$ eine äquivalente Reaktanz von dem AC-Bus zu der unendlichen Stromversorgung ist.

**3.** Verfahren nach Anspruch 1, wobei das Bestimmen (104) des maximalen Spannungswerts für den Anschluss neuer Energie und des maximalen AC-Busspannungswerts die für den Anschlusses neuer Energie beziehungsweise den AC-Bus tragbar sind, umfasst:

$$U_{r\_max} = \sqrt{U_g^2 + 2U_g\omega_g L_\Sigma + \left(\omega_g L_\Sigma\right)^2},$$

$$U_{s\_max} = \sqrt{U_g^2 + 2U_g\omega_g L_g + \left(\omega_g L_g\right)^2},$$

wobei $U_{r\_max}$ der maximale Spannungswert für den Anschluss neuer Energie ist; $U_{s\_max}$ der maximale AC-Busspannungswert ist; $U_g$ eine elektromotorische Kraft einer äquivalenten Stromversorgung eines Wechselstromnetzes ist; $\omega_g$ eine Winkelfrequenz des Wechselstromnetzes ist; $L_\Sigma$ eine äquivalente Reaktanz von dem Anschluss neuer Energie zu einer unendlichen Stromversorgung ist; und $L_g$ eine äquivalente Reaktanz von dem AC-Bus zu der unendlichen Stromversorgung ist.

**4.** System (600), das konfiguriert ist, um eine dominante Überspannung eines Stromversorgungssystems mit hohem Anteil neuer Energie zu identifizieren, umfassend:

eine Spannungsamplitudenberechnungseinheit (601), die konfiguriert ist, um eine Spannungsamplitude ($U_r$) eines Anschlusses neuer Energie beziehungsweise eine Spannungsamplitude ($U_s$) eines Wechselstrombusses (AC-Bus) zu einem beliebigen Zeitpunkt, nachdem ein Fehler in dem Stromversorgungssystems mit hohem Anteil neuer Energie behoben wurde;
eine Überspannungsgrenzverhältnisbestimmungseinheit (602), die konfiguriert ist, um ein Überspannungsgrenzverhältnis (N) gemäß einem Verhältnis der Spannungsamplitude des Anschlusses neuer Energie zu der Spannungsamplitude des AC-Busses zu bestimmen;
eine Einheit (603) für die Bestimmung des kritischen Überspannungsgrenzverhältnisses, die konfiguriert ist, um ein kritisches Überspannungsgrenzverhältnis ($N_m$) zu bestimmen;
eine Maximalspannungswertberechnungseinheit (604), die konfiguriert ist, um einen maximalen Spannungswert ($U_{r\_max}$) des Anschlusses neuer Energie und einen maximalen AC-Busspannungswerts ($U_{s\_max}$), der für den Anschluss neuer Energie beziehungsweise den AC-Bus tragbar ist; und
eine Identifizierungseinheit (605), die konfiguriert ist, um eine Identifizierung einer dominanten Spannungssicherheitsbeschränkung gemäß dem Überspannungsgrenzverhältnis, dem kritischen Überspannungsgrenzverhältnis, dem maximalen Spannungswert für den Anschluss neuer Energie und dem maximalen Wert der AC-Busspannung durchzuführen und ein Identifizierungsergebnis zu bestimmen;
**dadurch gekennzeichnet, dass**
die Einheit (603) für die Bestimmung des kritischen Überspannungsgrenzverhältnisses, die konfiguriert ist, um das kritisches Überspannungsgrenzverhältnis durch eine Formel zu bestimmen:

$$N_m = \sqrt{1 + \frac{L_r}{L_g} - \left[\frac{L_r U_g^2}{L_g} - \omega_g^2\left(L_r^2 + L_r L_g\right)\right]\frac{1}{U_{sN}^2}},$$

wobei $N_m$ das kritische Überspannungsgrenzverhältnis ist; $L_r$ eine äquivalente Reaktanz zwischen dem Anschluss neuer Energie und dem AC-Bus ist; $U_g$ eine elektromotorische Kraft einer äquivalenten Stromversorgung eines Wechselstromnetzes ist; $\omega_g$ eine Winkelfrequenz des Wechselstromnetzes ist; $L_g$ eine äquivalente Reaktanz von dem AC-Bus zu einer unendlichen Stromversorgung; und $U_{sN}$ ein voreingestellter Überspannungsgrenzwert des AC-Busses ist; und
die Identifizierungseinheit (605) speziell konfiguriert ist zum:

Bestimmen, dass die Spannungsgrenzüberschreitung an dem Anschlusses neuer Energie zuerst auftritt, als Reaktion darauf, dass die Spannungsamplitude des Anschlusses neuer Energie kleiner als oder gleich dem

17

maximalen Spannungswert für den Anschluss neuer Energie ist und das Überspannungsgrenzverhältnis kleiner als oder gleich 1 ist;

Bestimmen, dass die Spannungsgrenzüberschreitung an dem Anschluss neuer Energie zuerst auftritt, als Reaktion darauf, dass die Spannungsamplitude des Anschlusses neuer Energie kleiner als oder gleich dem maximalen Spannungswert für den Anschluss neuer Energie ist und das Überspannungsgrenzverhältnis größer als 1 und kleiner als das kritische Überspannungsgrenzverhältnis ist;

Bestimmen, dass die Spannungsgrenzüberschreitung an dem Anschluss neuer Energie und dem AC-Bus gleichzeitig auftritt, als Reaktion darauf, dass die Spannungsamplitude des Anschlusses neuer Energie kleiner als oder gleich dem maximalen Spannungswert für den Anschluss neuer Energie ist und das Überspannungsgrenzverhältnis gleich dem kritischen Überspannungsgrenzverhältnis ist; und

Bestimmen, dass die Spannungsgrenzüberschreitung an dem AC-Bus zuerst auftritt, als Reaktion darauf, dass die Spannungsamplitude des AC-Busses kleiner als oder gleich dem maximalen AC-Busspannungswert ist und das Überspannungsgrenzverhältnis größer als das kritische Überspannungsgrenzverhältnis ist.

5. System nach Anspruch 4, wobei die Spannungsamplitudenberechnungseinheit (601) speziell konfiguriert ist, um die Spannungsamplitude des Anschlusses neuer Energie und die Spannungsamplitude des AC-Busses zu einem beliebigen Zeitpunkt, nachdem Fehler der Anschlusses neuer Energie beziehungsweise des AC-Busses behoben wurden, durch die Formeln zu bestimmen:

$$U_r(t) = \sqrt{\left(u_r^d(t)\right)^2 + \left(u_r^q(t)\right)^2}$$
$$= \sqrt{U_g^2 - 2U_g\omega_{pll}(t)L_\Sigma \cos(\delta_{pll}(t)) + \left(\omega_{pll}(t)L_\Sigma\right)^2} \, ,$$

$$U_s(t) = \sqrt{\left(u_s^d(t)\right)^2 + \left(u_s^q(t)\right)^2}$$
$$= \sqrt{U_g^2 - 2U_g\omega_{pll}(t)L_g \cos(\delta_{pll}(t)) + \left(\omega_{pll}(t)L_g\right)^2} \, ,$$

wobei $U_r(t)$ eine Spannungsamplitude des Anschlusses neuer Energie zu einem Zeitpunkt t ist; $u_r^q(t)$ eine q-Achsen-Komponente einer Spannung des Anschlusses neuer Energie zu dem Zeitpunkt t ist; $u_r^d(t)$ eine d-Achsen-Komponente der Spannung des Anschlusses neuer Energie zu dem Zeitpunkt t ist; $U_g$ eine elektromotorische Kraft einer äquivalenten Stromversorgung eines Wechselstromnetzes ist; $\omega_{pll}(t)$ eine Winkelfrequenz einer Phasenregelschleife (PLL) zu dem Zeitpunkt t ist; $\delta_{pll}(t)$ ein Phasenregelwinkel der PLL zu dem Zeitpunkt t ist; $L_\Sigma$ eine äquivalente Reaktanz von dem Anschluss neuer Energie zu einer unendlichen Stromversorgung ist; $U_s(t)$ eine Spannungsamplitude des AC-Busses zu dem Zeitpunkt t ist; $u_s^q(t)$ eine q-Achsen-Komponente einer Spannung des AC-Busses zu dem Zeitpunkt t ist; $u_s^d(t)$ eine d-Achsen-Komponente der Spannung des AC-Busses zu dem Zeitpunkt t ist; und $L_g$ eine äquivalente Reaktanz von dem AC-Bus zu der unendlichen Stromversorgung ist.

6. System nach Anspruch 4, wobei die Maximalspannungswertberechnungseinheit (604) speziell konfiguriert ist, um den maximalen Spannungswert für den Anschluss neuer Energie und den maximalen AC-Busspannungswert zu bestimmen, die für den Anschlusses neuer Energie beziehungsweise den AC-Bus tragbar sind, durch die folgenden Formeln:

$$U_{r\_max} = \sqrt{U_g^2 + 2U_g\omega_g L_\Sigma + \left(\omega_g L_\Sigma\right)^2} \, ,$$

$$U_{s\_max} = \sqrt{U_g^2 + 2U_g\omega_g L_g + \left(\omega_g L_g\right)^2} \, ,$$

wobei $U_{r\_max}$ der maximale Spannungswert für den Anschluss neuer Energie ist; $U_{s\_max}$ der maximale AC-Busspannungswert ist; $U_g$ eine elektromotorische Kraft einer äquivalenten Stromversorgung eines Wechselstromnetzes ist; $\omega_g$ eine Winkelfrequenz des Wechselstromnetzes ist; $L_\Sigma$ eine äquivalente Reaktanz von dem Anschluss neuer Energie zu einer unendlichen Stromversorgung ist; und $L_g$ eine äquivalente Reaktanz von dem AC-Bus zu der unendlichen Stromversorgung ist.

7. Computerlesbares Speichermedium, das ein darauf gespeichertes Computerprogramm aufweist, das Programm umfassend Anweisungen, die, wenn sie durch einen Prozessor ausgeführt werden, den Prozessor veranlassen, die Schritte des Verfahrens nach einem der Ansprüche 1 bis 3 auszuführen.

8. Elektronische Vorrichtung, umfassend:

   das computerlesbare Speichermedium nach Anspruch 7; und
   einen oder mehrere Prozessoren, die konfiguriert ist, um das Programm auf dem computerlesbaren Speichermedium auszuführen.

9. Computerprogrammprodukt, umfassend Computeranweisungen, wobei die Computeranweisungen eine Computervorrichtung veranlassen, die Schritte des Verfahrens nach einem der Ansprüche 1 bis 3 durchzuführen, wenn die Computeranweisungen auf der Computervorrichtung ausgeführt werden.

**Revendications**

1. Procédé (100) d'identification d'une surtension dominante d'un système d'alimentation en énergie nouvelle à forte proportion, comprenant :

   la détermination (101) d'une amplitude de tension ($U_r$) d'une nouvelle borne d'énergie et d'une amplitude de tension ($U_s$) d'un bus à courant alternatif (CA) respectivement à tout moment après l'élimination d'un défaut du système d'alimentation en énergie nouvelle à forte proportion ;
   la détermination (102) d'un rapport de limite de surtension (N) selon un rapport entre l'amplitude de tension de la nouvelle borne d'énergie et l'amplitude de tension du bus CA ;
   la détermination (103) d'un rapport de limite de surtension critique ($N_m$) ;
   la détermination (104) d'une valeur maximale de tension de nouvelle borne d'énergie ($U_{r\_max}$) et une valeur maximale de tension de bus CA ($U_{s\_max}$) supportables pour la nouvelle borne d'énergie et le bus CA respectivement ; et
   le fait d'effectuer (105) l'identification d'une contrainte de sécurité de tension dominante selon le rapport de limite de surtension, du rapport de limite de surtension critique, de la valeur maximale de tension de nouvelle borne d'énergie et de la valeur maximale de tension de bus CA, et la détermination d'un résultat d'identification ;
   **caractérisé en ce que :**

   la détermination (103) du rapport de limite de surtension critique comprend l'expression dudit rapport de limite de surtension critique comme :

$$N_{\mathrm{m}} = \sqrt{1 + \frac{L_{\mathrm{r}}}{L_{\mathrm{g}}} - \left[\frac{L_{\mathrm{r}} U_g^2}{L_{\mathrm{g}}} - \omega_g^2 (L_{\mathrm{r}}^2 + L_{\mathrm{r}} L_{\mathrm{g}})\right]\frac{1}{U_{\mathrm{sN}}^2}} \; ,$$

   dans lequel $N_{\mathrm{m}}$ est le rapport de limite de surtension critique ; $L_r$ est une réactance équivalente entre la nouvelle borne d'énergie et le bus CA ; $U_g$ est une force électromotrice d'une alimentation équivalente d'un réseau électrique à courant alternatif ; $\omega_g$ est une fréquence angulaire du réseau électrique CA ; $L_g$ est une réactance équivalente entre le bus CA et une alimentation électrique infinie ; et $U_{\mathrm{sN}}$ est une valeur limite de surtension prédéfinie du bus CA ; et
   le fait d'effectuer (105) l'identification de la contrainte de sécurité de tension dominante selon le rapport de limite de surtension, du rapport de limite de surtension critique, de la valeur maximale de tension de nouvelle borne d'énergie et de la valeur maximale de tension de bus CA, et la détermination du résultat d'identification comprend :

la détermination que la limite de dépassement de tension se produit d'abord sur la nouvelle borne d'énergie, en réponse à l'amplitude de tension de la nouvelle borne d'énergie étant inférieure ou égale à la valeur maximale de tension de nouvelle borne d'énergie, et au rapport de limite de surtension inférieur ou égal à 1 ;

la détermination que la limite de dépassement de tension se produit d'abord sur la nouvelle borne d'énergie, en réponse à l'amplitude de tension de la nouvelle borne d'énergie étant inférieure ou égale à la valeur maximale de la tension de nouvelle borne d'énergie, et au rapport de limite de surtension qui est supérieur à 1 et inférieur au rapport de limite de surtension critique ;

la détermination que la limite de dépassement de tension se produit simultanément sur la nouvelle borne d'énergie et le bus CA, en réponse à l'amplitude de tension de la nouvelle borne d'énergie étant inférieure ou égale à la valeur maximale de tension de nouvelle borne d'énergie, et au rapport de limite de surtension qui est égal au rapport de limite de surtension critique ; et

la détermination que la limite de dépassement de tension se produit d'abord sur le bus CA, en réponse à l'amplitude de tension de bus CA inférieure ou égale à la valeur de tension maximale de bus CA, et au rapport de limite de surtension supérieur au rapport de limite de surtension critique.

2. Procédé selon la revendication 1, dans lequel la détermination (101) de l'amplitude de tension de la nouvelle borne d'énergie et de l'amplitude de tension du bus CA à tout moment après l'élimination respective des défauts de la nouvelle borne d'énergie et du bus CA, comprend :

$$U_r(t) = \sqrt{\left(u_r^d(t)\right)^2 + \left(u_r^q(t)\right)^2}$$
$$= \sqrt{U_g^2 - 2U_g\omega_{pll}(t)L_\Sigma \cos(\delta_{pll}(t)) + \left(\omega_{pll}(t)L_\Sigma\right)^2} \quad,$$

$$U_s(t) = \sqrt{\left(u_s^d(t)\right)^2 + \left(u_s^q(t)\right)^2}$$
$$= \sqrt{U_g^2 - 2U_g\omega_{pll}(t)L_g \cos(\delta_{pll}(t)) + \left(\omega_{pll}(t)L_g\right)^2} \quad,$$

dans lequel $U_r(t)$ est une amplitude de tension de la nouvelle borne d'énergie à un moment t ; $u_r^q(t)$ est une composante de l'axe q de la tension de la nouvelle borne d'énergie à l'instant t ; $u_r^d(t)$ est une composante de l'axe d de la tension de la nouvelle borne d'énergie à l'instant t ; $U_g$ est une force électromotrice d'une alimentation équivalente d'un réseau électrique à courant alternatif ; $\omega_{pll}(t)$ est une fréquence angulaire d'une boucle à verrouillage de phase (PLL) à l'instant t ; $\delta_{pll}(t)$ est un angle de verrouillage de phase de la PLL à l'instant t ; $L_\Sigma$ est une réactance équivalente entre la borne d'énergie nouvelle et une alimentation électrique infinie ; $U_s(t)$ est une amplitude de tension du bus CA à l'instant t ; $u_s^q(t)$ est une composante d'axe q d'une tension du bus CA à l'instant t ; $u_s^d(t)$ est une composante d'axe d de la tension du bus CA à l'instant t ; et $L_g$ est une réactance équivalente entre le bus CA et l'alimentation en énergie infinie.

3. Procédé selon la revendication 1, dans lequel la détermination (104) de la valeur maximale de tension de nouvelle borne d'énergie et de la valeur maximale de tension de bus CA supportable de nouvelle borne d'énergie et le bus CA respectivement comprend :

$$U_{r\_max} = \sqrt{U_g^2 + 2U_g\omega_g L_\Sigma + \left(\omega_g L_\Sigma\right)^2} \quad,$$

$$U_{s\_max} = \sqrt{U_g^2 + 2U_g\omega_g L_g + \left(\omega_g L_g\right)^2} \quad,$$

**dans lequel** $U_{r\_max}$ est la valeur maximale de tension de nouvelle borne d'énergie ; $U_{s\_max}$ est la valeur maximale de tension de bus CA ; $U_g$ est une force électromotrice d'une alimentation équivalente d'un réseau électrique à courant alternatif ; $\omega_g$ est une fréquence angulaire du réseau électrique CA ; $L_{\Sigma}$ est une réactance équivalente entre la borne d'énergie nouvelle et une alimentation électrique infinie ; et $L_g$ est une réactance équivalente entre le bus CA et l'alimentation en énergie infinie.

**4.** Système (600) configuré pour identifier une surtension dominante d'un système d'alimentation en énergie nouvelle à forte proportion, comprenant :

    une unité de calcul d'amplitude de tension (601), configurée pour déterminer une amplitude de tension ($U_r$) d'une borne d'énergie nouvelle et une amplitude de tension ($U_s$) d'un bus à courant alternatif (CA), respectivement, à tout moment après l'élimination d'un défaut du système d'alimentation en énergie nouvelle à proportion élevée ;
    une unité de détermination de rapport de limite de surtension (602), configurée pour déterminer un rapport de limite de surtension (N) selon un rapport entre l'amplitude de tension de la nouvelle borne d'énergie et l'amplitude de tension du bus CA ;
    une unité de détermination de rapport de limite de surtension critique (603), configurée pour déterminer un rapport de limite de surtension critique ($N_m$) ;
    une unité de calcul de valeur de tension maximale (604), configurée pour déterminer une valeur de tension maximale de nouvelle borne d'énergie ($U_{r\_max}$) et une valeur de tension maximale du bus CA ($U_{s\_max}$) supportable pour la nouvelle borne d'énergie et le bus CA respectivement ; et
    une unité d'identification (605), configurée pour effectuer l'identification d'une contrainte de sécurité de tension dominante selon le rapport de limite de surtension, du rapport de limite de surtension critique, de la valeur maximale de tension de nouvelle borne d'énergie et de la valeur maximale de tension du bus CA, et pour déterminer un résultat d'identification ;

**caractérisé en ce que**

l'unité de détermination de rapport de limite de surtension critique (603) est spécifiquement configurée pour déterminer le rapport de limite de surtension critique à l'aide d'une formule :

$$N_m = \sqrt{1 + \frac{L_r}{L_g} - [\frac{L_r U_g^2}{L_g} - \omega_g^2(L_r^2 + L_r L_g)]\frac{1}{U_{sN}^2}} \; ,$$

    dans lequel $N_m$ est le rapport de limite de surtension critique ; $L_r$ est une réactance équivalente entre la nouvelle borne d'énergie et le bus CA ; $U_g$ est une force électromotrice d'une alimentation équivalente d'un réseau électrique à courant alternatif ; $\omega_g$ est une fréquence angulaire du réseau électrique CA ; $L_g$ est une réactance équivalente entre le bus CA et une alimentation électrique infinie ; et $U_{sN}$ est une valeur limite de surtension prédéfinie du bus CA ; et
    l'unité d'identification (605) est spécifiquement configurée pour :

        déterminer que le dépassement de limite de tension se produit d'abord dans la nouvelle borne d'énergie, en réponse à l'amplitude de tension de la nouvelle borne d'énergie inférieure ou égale à la valeur de tension maximale de la nouvelle borne d'énergie, et au rapport de limite de surtension inférieur ou égal à 1 ;
        déterminer que la limite de dépassement de tension se produit d'abord sur la nouvelle borne d'énergie, en réponse à l'amplitude de tension de la nouvelle borne d'énergie étant inférieure ou égale à la valeur de tension maximale de nouvelle borne d'énergie, et au rapport de limite de surtension supérieur à 1 et inférieur au rapport de limite de surtension critique ;
        déterminer que le dépassement de limite de tension se produit simultanément sur la nouvelle borne d'énergie et le bus CA, en réponse à l'amplitude de tension de la nouvelle borne d'énergie qui est inférieure ou égale à la valeur maximale de la tension de nouvelle borne d'énergie, et au rapport de limite de surtension qui est égal au rapport de limite de surtension critique ; et
        déterminer que le dépassement de limite de tension se produit d'abord sur le bus CA, en réponse à l'amplitude de tension du bus CA étant inférieure ou égale à la valeur maximale de tension du bus CA, et au rapport de limite de surtension supérieur au rapport de limite de surtension critique.

**5.** Système selon la revendication 4, dans lequel l'unité de calcul d'amplitude de tension (601) est spécifiquement configurée pour déterminer l'amplitude de tension de la nouvelle borne d'énergie et l'amplitude de tension du bus CA à tout moment après que les défauts de la nouvelle borne d'énergie et du bus CA ont été éliminés respectivement par des formules :

$$U_r(t) = \sqrt{\left(u_r^d(t)\right)^2 + \left(u_r^q(t)\right)^2}$$

$$= \sqrt{U_g^2 - 2U_g\omega_{pll}(t)L_\Sigma \cos(\delta_{pll}(t)) + \left(\omega_{pll}(t)L_\Sigma\right)^2}\ ,$$

$$U_s(t) = \sqrt{\left(u_s^d(t)\right)^2 + \left(u_s^q(t)\right)^2}$$

$$= \sqrt{U_g^2 - 2U_g\omega_{pll}(t)L_g \cos(\delta_{pll}(t)) + \left(\omega_{pll}(t)L_g\right)^2}\ ,$$

dans lequel $U_r(t)$ est une amplitude de tension de la nouvelle borne d'énergie à un moment t ; $u_r^q(t)$ est une composante de l'axe q de la tension de la nouvelle borne d'énergie à l'instant t ; $u_r^d(t)$ est une composante de l'axe d de la tension de la nouvelle borne d'énergie à l'instant t ; $U_g$ est une force électromotrice d'une alimentation équivalente d'un réseau électrique à courant alternatif ; $\omega_{pll}(t)$ est une fréquence angulaire d'une boucle à verrouillage de phase (PLL) à l'instant t ; $\delta_{pll}(t)$ est un angle de verrouillage de phase de la PLL à l'instant t ; $L_\Sigma$ est une réactance équivalente entre la borne d'énergie nouvelle et une alimentation électrique infinie ; $U_s(t)$ est une amplitude de tension du bus CA à l'instant t ; $u_s^q(t)$ est une composante d'axe q d'une tension du bus CA à l'instant t ; $u_s^d(t)$ est une composante d'axe d de la tension du bus CA à l'instant t ; et $L_g$ est une réactance équivalente entre le bus CA et l'alimentation en énergie infinie.

6. Système selon la revendication 4, dans lequel l'unité de calcul de valeur de tension maximale (604) est spécifiquement configurée pour déterminer la valeur de tension maximale de nouvelle borne d'énergie et la valeur de tension maximale du bus CA supportable pour la nouvelle borne d'énergie et le bus CA respectivement à l'aide de formules :

$$U_{r\_max} = \sqrt{U_g^2 + 2U_g\omega_g L_\Sigma + \left(\omega_g L_\Sigma\right)^2}\ ,$$

$$U_{s\_max} = \sqrt{U_g^2 + 2U_g\omega_g L_g + \left(\omega_g L_g\right)^2}\ ,$$

**dans lequel** $U_{r\_max}$ est la valeur maximale de tension terminale de nouvelle énergie ; $U_{s\_max}$ est la valeur maximale de tension de bus CA ; $U_g$ est une force électromotrice d'une alimentation équivalente d'un réseau électrique à courant alternatif ; $\omega_g$ est une fréquence angulaire du réseau électrique CA ; $L_\Sigma$ est une réactance équivalente entre la borne d'énergie nouvelle et une alimentation électrique infinie ; et $L_g$ est une réactance équivalente entre le bus CA et l'alimentation en énergie infinie.

7. Support de stockage lisible par ordinateur, ayant stocké un programme informatique, le programme comprenant des instructions qui, lorsqu'elles sont exécutées par un processeur, amènent le processeur à exécuter les étapes du procédé selon l'une quelconque des revendications 1 à 3.

8. Dispositif électronique, comprenant :

le support de stockage lisible par ordinateur selon la revendication 7 ; et
un ou plusieurs processeurs, configurés pour exécuter le programme sur le support de stockage lisible par ordinateur.

9. Produit de programme informatique, comprenant des instructions informatiques, les instructions informatiques amenant un dispositif informatique à effectuer les étapes du procédé selon l'une quelconque des revendications 1 à 3, lorsque les instructions informatiques sont exécutées sur le dispositif informatique.

100

Determine a voltage amplitude of a new energy terminal and a voltage amplitude of an AC bus at any moment after faults of the new energy terminal and the AC bus are cleared respectively

101

Determine an overvoltage limit ratio according to a ratio of the voltage amplitude of the new energy terminal to the voltage amplitude of the AC bus

102

Determine a critical overvoltage limit ratio

103

Determine a maximum new energy terminal voltage value and a maximum AC bus voltage value bearable for the new energy terminal and the AC bus respectively

104

Perform identification of a dominant voltage safety constraint according to the overvoltage limit ratio, the critical overvoltage limit ratio, the maximum new energy terminal voltage value and the maximum AC bus voltage value, and determine an identification result

105

**FIG. 1**

$u_r$    $u_s$

$j\omega_{pll}L_r$    $j\omega_{pll}L_g$

$i_c$    $u_g$    AC power grid

**FIG. 2**

**FIG. 3**

**FIG. 4**

**FIG. 5**

600

Voltage amplitude calculation unit 601

Overvoltage limit ratio determination unit 602

Critical overvoltage limit ratio determination unit 603

Maximum voltage value calculation unit 604

Identification unit 605

**FIG. 6**

**EP 4 350 918 B1**

**REFERENCES CITED IN THE DESCRIPTION**

**Patent documents cited in the description**

- CN 202210475787

- CN 113783232 A